(19) Europäisches Patentamt
European Patent Office
Office européen des brevets

(11) EP 0 411 977 B1

(12) **FASCICULE DE BREVET EUROPEEN**

(45) Date de publication et mention de la délivrance du brevet:
**04.06.1997 Bulletin 1997/23**

(21) Numéro de dépôt: **90401923.9**

(22) Date de dépôt: **03.07.1990**

(51) Int Cl.[6]: **C08K 5/03**, C08L 65/00, C08L 23/02
// (C08L65/00, 23:02), (C08L23/02, 65:00)

(54) **Composition caoutchoutique et élastomère thermoplastique à base de polynorbornène possédant une stabilité thermique améliorée**

Kautschukmischung und thermoplastisches Elastomer auf Polynorbornenbasis mit verbesserter thermischer Stabilität

Rubber composition and thermoplastic elastomer based on polynorbornene with improved thermic stability

(84) Etats contractants désignés:
**AT BE CH DE DK ES FR GB GR IT LI LU NL SE**

(30) Priorité: **04.07.1989 FR 8908985**
**18.05.1990 FR 9006265**

(43) Date de publication de la demande:
**06.02.1991 Bulletin 1991/06**

(73) Titulaire: **ELF ATOCHEM S.A.**
**92800 Puteaux (FR)**

(72) Inventeurs:
- **Levif, Gabriel**
  **F-60180 Nogent Sur Oise (FR)**
- **Coupe, Frédéric**
  **F-60550 Verneuil en Halatte (FR)**

(74) Mandataire: **Chaillot, Geneviève et al**
**Cabinet CHAILLOT,**
**B.P. No. 74**
**92703 Colombes Cédex (FR)**

(56) Documents cités:
**EP-A- 0 018 751** **GB-A- 2 162 526**

- **CHEMICAL ABSTRACTS, vol. 94, no. 10, 09 mars 1981 Columbus, Ohio, USA T.N. SUDZILOVSKAYA et al.: "Characteristics of the vulcanization of butadiene-nitrile rubber by hexachloro-p-xylene in the presence of metal oxides" page 64; ref. no. 66981T & KAUCH. REZINA 1980, (12), 13-15**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 411 977 B1

## Description

La présente invention se rapporte à des compositions caoutchoutiques à base de polynorbornène possédant une stabilité thermique améliorée ainsi qu'à des élastomères thermoplastiques thermiquement stables obtenus à partir de ces compositions.

Le polynorbornène formulé et vulcanisé est un caoutchouc assez sensible à la dégradation thermique en raison de son taux d'insaturation élevé. Lorsque le système de vulcanisation utilisé est à base de soufre, il conduit à des pontages à liaisons soufre-soufre qui rendent le polynorbornène vulcanisé d'autant plus fragile à la température. Ainsi, il est connu que les caoutchoucs formulés à partir de polynorbornène perdent généralement l'essentiel de leurs propriétés mécaniques (notamment résistance et allongement à la rupture) après des vieillissements de longue durée à des températures supérieures à 80°C.

Plusieurs solutions ont déjà été proposées pour améliorer la tenue au vieillissement thermique des caoutchoucs formulés à base de polynorbornène. Parmi ces solutions on peut citer notamment l'addition au caoutchouc formulé d'au moins un antioxydant de type phénolique ou bien tel que le sel de zinc du mercaptobenzoimidazole. On peut citer également le recours à des composés réactifs capables de former des liaisons carbone-oxygène ou carbone-carbone, tels que des résines phénoliques généralement associées à des composés accélérateurs tels que des acides de Lewis ou certains oxydes métalliques (en particulier ceux de zinc et de magnésium). A titre d'exemple d'un tel système réactif, on peut citer la combinaison de chlorure stanneux et d'une résine phénolique de formule :

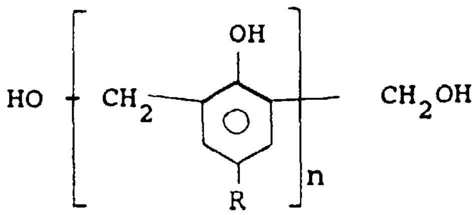

dans laquelle : n = 4 ou 5 et R désigne un radical alkyle. Les solutions précitées pour améliorer la tenue au vieillissement thermique des caoutchoucs formulés à base de polynorbornène peuvent naturellement être combinées pour renforcer leurs effets. Toutefois, même dans ce cas, on observe généralement que lesdits caoutchoucs perdent plus de 80% de leur résistance à la rupture après un vieillissement de 7 jours à 100°C et perdent la quasi-totalité de leurs propriétés mécaniques (allongement et résistance à la rupture) après 14 jours de vieillissement à 100°C. Cette situation constitue bien évidemment un frein à l'utilisation des caoutchoucs formulés à base de polynorbornène dans un certain nombre d'applications.

Un premier but de la présente invention consiste donc à mettre au point un moyen efficace pour améliorer la tenue au vieillissement thermique de caoutchoucs formulés à base de polynorbornène, et en particulier pour maintenir l'essentiel de leurs propriétés mécaniques après un vieillissement de longue durée à des températures supérieures à 80°C.

Par ailleurs, le brevet US-A-4 203 884 enseigne que des compositions comprenant le mélange d'une polyoléfine cristalline thermoplastique, de polynorbornène et d'une quantité de plastifiant du polynorbornène suffisante pour abaisser sa température de transition vitreuse jusqu'à la gamme des caoutchoucs possèdent des propriétés intéressantes. Plus particulièrement, ce document divulgue des compositions comprenant un mélange de 75 à 10 parties en poids de polyoléfine, de 25 à 90 parties en poids de polynorbornène et, pour 100 parties en poids de polynorbornène, de 30 à 400 parties en poids de plastifiant, lesdites compositions étant élastoplastiques, c'est-à-dire qu'elles possèdent des propriétés élastomériques tout en pouvant être transformées comme des thermoplastiques. A l'état fondu, selon cette technique, une partie du plastifiant peut se trouver présent dans la phase polyoléfine thermoplastique. Après refroidissement, le plastifiant migre substantiellement de la phase polyoléfine cristalline vers la phase polynorbornène pour faire partie de cette dernière. De la sorte, le plastifiant améliore la thermoplasticité ou la capacité de mise en oeuvre de la composition. En règle générale, pour un degré de thermoplasticité donné, la composition requiert d'autant moins de polyoléfine que la quantité de plastifiant est plus importante.

Le brevet US-A-4 203 884 divulgue également des compositions comprenant un mélange de 10 à 90 parties en poids de polyoléfine cristalline et de 90 à 10 parties en poids de polynorbornène réticulé dispersé sous forme de particules de petite taille, et de plastifiant en quantité suffisante pour abaisser la température de transition vitreuse du polynorbornène jusqu'à la gamme des caoutchoucs. Ainsi la réticulation du polynorbornène améliore le compromis des propriétés de la composition, en particulier la résistance à la rupture, la résistance aux solvants et les propriétés à haute température. De telles compositions sont obtenues par un procédé de vulcanisation dynamique selon lequel un mélange de polynorbornène, de plastifiant, de polyoléfine et de réticulants est malaxé à une température suffisante pour réticuler le polynorbornène.

Parmi les polyoléfines cristallines thermoplastiques utilisables selon le brevet US-A-4 203 884, on peut citer le polyéthylène et le polypropylène, ce dernier étant préféré. Toutefois, les compositions selon le brevet US-A-4 203 884, que le polynorbornène soit réticulé ou non, présentent en commun l'inconvénient d'une tenue insuffisante au vieillissement thermique qui se traduit par la perte d'une partie substantielle des propriétés mécaniques (notamment résistance et allongement à la rupture) après un vieillissement de longue durée à des températures supérieures à 80°C. Comme dans le cas précédent des caoutchoucs formulés à base de polynorbornène, l'addition d'un antioxydant de type phénolique et/ou d'un sel de zinc du mercaptobenzoimidazole et/ou d'un composé réactif tel qu'une résine phénolique associée le cas échéant à un accélérateur tel qu'un acide de Lewis ou un oxyde métallique s'est révélée d'une efficacité insuffisante. C'est pourquoi un second but de la présente invention consiste à mettre au point un moyen réellement efficace pour améliorer la tenue au vieillissement thermique de compositions élastoplastiques à base de polynorbornène réticulé et de polyoléfine cristalline telles que notamment celles conformes au brevet US-A-4 203 884, et en particulier pour maintenir l'essentiel de leurs propriétés mécaniques (notamment résistance et allongement à la rupture) après un vieillissement de longue durée à des températures supérieures à 80°C.

Conformément au premier but précité, la présente invention a pour premier objet une composition caoutchoutique de stabilité thermique améliorée à base de polynorbornène, caractérisée en ce qu'elle comprend un mélange d'au moins 50% en poids de polynorbornène et au plus 50% en poids d'un autre caoutchouc et en ce que ledit mélange a été vulcanisé au moyen d'une quantité comprise entre 0,1% to 6% en poids par rapport au mélange de polynorbornène et de caoutchouc, d'au moins un composé de formule :

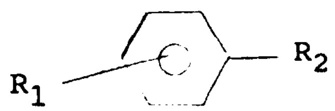

(I)

dans laquelle $R_1$ et $R_2$, identiques ou différents, sont choisis parmi les radicaux $CH_nX_{3-n}$, X étant un atome d'halogène choisi parmi le chlore et le brome et n étant un nombre entier allant de 0 à 2 en présence d'au moins un accélérateur de vulcanisation et éventuellement d'au moins un activateur de vulcanisation.

Dans les composés de formule (I) utilisables selon l'invention, le radical $R_1$ peut être situé en position ortho, méta ou para. Un exemple préferentiel d'un tel composé est constitué par l'hexachloroparaxylène.

Par polynorbornène au sens de la présente invention, on entend un polymère ou copolymère amorphe du bicyclo [2,2,1] heptène-2 et de ses dérivés substitués tels que décrits dans le brevet US-A-3 676 390.

Par caoutchouc destiné à être mélangé au polynorbornène conformément à la présente invention on entend un caoutchouc choisi notamment parmi le caoutchouc naturel, le caoutchouc nitrile, le caoutchouc butadiène, le caoutchouc styrène-butadiène, le polychloroprène, les caoutchoucs butyl et butyl bromé, le polyisoprène, les caoutchoucs éthylène-propylène et éthylène-propylène-diène, le diène étant choisi parmi les diènes linéaires ou cycliques, conjugués ou non-conjugués comme par exemple le butadiène, l'isoprène, le 1,3-pentadiène, le 1,4-pentadiène, le 1-4-hexadiène, le 1,5-hexadiène, le 1,9 décadiène, le 5-méthylène-2-norbornène, le 5-vinyl-2-norbornène, les 2-alkyl-2,5-norbornadiènes, le 5-éthylidène-2-norbornène, le 5-(2-propényl)-2-norbornène, le 5-(5-hexényl)-2-norbornène, le 1,5-cyclooctadiène, le bicyclo [2,2,2] octa-2,5-diène, le cyclopentadiène, le 4,7,8,9-tétrahydroindène et l'isopropylidène tétrahydroindène. Ces derniers caoutchoucs comprennent en général entre 15% et 60% environ en moles de motifs dérivés du propylène et entre 0,1% et 20% environ en moles de motifs dérivés du diène.

La composition caoutchoutique selon l'invention comprend, outre le mélange de polynorbornène et de caoutchouc vulcanisé par le composé de formule (I) qui en constitue le composant caractéristique, au moins un activateur ou accélérateur de vulcanisation, tel que par exemple, l'oxyde de zinc, l'oxyde de magnésium.

Dans les compositions caoutchoutiques selon l'invention, le mélange de polynorbornène et de caoutchouc est de préférence réticulé jusqu'au point où pas plus de 10%, de préférence pas plus de 5%, du polynorbornène puisse être extrait par un solvant, tel que le xylène bouillant, dans lequel le polynorbornène non-réticulé est complètement soluble.

La composition caoutchoutique selon l'invention comprend généralement en outre au moins un plastifiant du polynorbornène capable d'abaisser sa température de transition vitreuse jusqu'à la gamme des caoutchoucs. A ce titre, on peut citer les huiles lourdes aromatiques, naphténiques ou paraffiniques dérivées du pétrole, de point de congélation inférieur à 0°C et de point éclair supérieur à 180°C, et les diesters de l'acide phtalique tels que les phtalates de dioctyle ou de didodécyle. Ces plastifiants peuvent être utilisés purs ou en mélange.

La composition caoutchoutique selon l'invention peut en outre comprendre des ingrédients usuels tels que :

- antioxydants comme les phénols substitués ou le sel de zinc du mercaptobenzoimidazole,
- charges pulvérulentes comme le kaolin, la silice, le noir de carbone, l'alumine, l'argile, l'aluminosilicate,le talc ou le carbonate.

Conformément au but recherché, la composition caoutchoutique selon l'invention présente une tenue au vieillissement thermique satisfaisante et en particulier conserve l'essentiel de ses propriétés mécaniques après un vieillissement de longue durée à des températures supérieures à 80°C.

Conformément au second but précité, la présente invention a pour second objet une composition comprenant :

- de 10 à 90 parties en poids d'au moins un polymère cristallin (A) à base d'oléfine,
- de 90 à 10 parties en poids d'un mélange (B) d'au moins 50% en poids de polynorbornène et au plus 50% en poids d'un autre caoutchouc, et
- une quantité de plastifiant du polynorbornène suffisante pour abaisser sa température de transition vitreuse jusqu'à la gamme des caoutchoucs,

la somme du polymère (A) et du mélange (B) étant égale à 100 parties en poids et le mélange (B) étant vulcanisé au moyen d'une quantité efficace d'au moins un composé de formule :

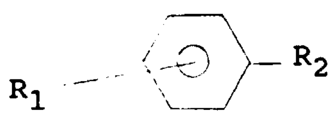

(I)

dans laquelle $R_1$ et $R_2$ identiques ou différents, sont choisis parmi les radicaux $CH_nX_{3-n}$, X étant un atome d'halogène choisi parmi le chlore et le brome et n étant un nombre entier allant de 0 à 2.

Le polymère cristallin à base d'oléfine utilisable dans la composition thermoplastique selon l'invention peut appartenir à l'une quelconque des familles suivantes :

- polymères de propylène, en particulier polypropylène isotactique et copolymères comprenant au moins 80% en moles de motifs dérivés du propylène et au plus 20% en moles de motifs dérivés de l'éthylène ou d'une alpha-oléfine ayant de 4 à 10 atomes de carbone ;
- polymères radicalaires de l'éthylène, généralement obtenus par polymérisation sous haute pression et ayant une densité de 0,91 à 0,93 environ ;
- polymères linéaires de l'éthylène, généralement obtenus par polymérisation en présence de catalyseurs Ziegler et comprenant notamment le polyéthylène haute densité et les copolymères d'éthylène et d'au moins une alpha-oléfine ayant de 3 à 10 atomes de carbone. Parmi ces derniers, ceux ayant une densité comprise entre 0,89 et 0,93, un taux de cristallinité compris entre 15 et 50% et un indice de fluidité compris entre 0,5 et 15 dg/min. sont particulièrement avantageux. De tels copolymères sont bien connus de l'homme de l'art et peuvent être préparés par divers procédés, soit sous basse pression et à température modérée, soit sous haute pression et à température élevée. Correspondant à la gamme de densité indiquée, leur teneur molaire en alpha-oléfine est généralement comprise entre 1 et 10%, selon la nature de l'alpha-oléfine. Parmi les alpha-oléfines pouvant entrer dans la constitution de ces copolymères, on citera tout particulièrement le propylène, le butène-1, l'hexène-1, le méthyl-4 pentène-1 et l'octène-1. Parmi les copolymères éthylène/alpha-oléfine utilisables selon la présente invention, on préfère avantageusement des terpolymères éthylène/propylène/butène-1, ainsi que des copolymères d'éthylène et d'alpha-oléfines supérieures (c'est-à-dire ayant au moins 4 atomes de carbone), conformes au brevet européen n° 070 220. Ces derniers sont des copolymères d'hétérogénéité macromoléculaire particulièrement marquée, c'est-à-dire dans lesquels la teneur en alpha-oléfine peut s'écarter notablement, selon les fractions cristallines ou amorphes dans lesquelles on la mesure, de la teneur moyenne en alpha-oléfine dans le copolymère. Dans certains copolymères de ce type, l'hétérogénéité peut être telle que la teneur en alpha-oléfine dans une fraction cristalline soit 1/10e (un dixième) de la teneur moyenne et que la teneur en alpha-oléfine dans une fraction amorphe soit jusqu'à 5 fois la teneur moyenne. Par ailleurs, de tels copolymères hétérogènes sont avantageusement tels que leurs fractions cristallines présentent un pic unique de fusion à une température comprise entre 116° et 130°C. Parmi leurs autres caractéristiques préférentielles, on peut citer :
  - un taux d'insaturation global compris enre 0,25 et 0,50 double liaison pour 1000 atomes de carbone,
  - un indice de polydispersité compris entre 3 et 9 lorsque le copolymère comprend une seule alpha-oléfine, entre 6 et 12 lorsque le copolymère comprend au moins deux alpha-oléfines,
  - un poids moléculaire moyen en nombre $M_n$ compris entre 12 000 et 60 000 environ,
- copolymères d'éthylène et d'au moins un acrylate d'alkyle dont le groupe alkyle a de 1 à 8 atomes de carbone, comprenant de préférence de 0,5 à 7% en moles d'acrylate et ayant de préférence un indice de fluidité compris entre 0,1 et 20 dg/min. environ.

La nature du polynorbornène, de son plastifiant et de l'autre caoutchouc dans la composition élastoplastique selon l'invention est la même que celle indiquée ci-dessus au sujet de la composition caoutchoutique.

Les propriétés des compositions thermoplastiques selon l'invention peuvent être avantageusement modifiées, pour les besoins de certains usages particuliers, par l'addition d'ingrédients conventionnels tels que :

- pigments blancs (oxyde de titane) ou colorés,
- agents de couplage, tels que silanes ou titanates,
- antioxydants tels que, par exemple, le sel de zinc du mercaptobenzimidazole,
- stabilisants, tels que, par exemple, la 2,2,4-triméthyl-1,2-dihydroquinoléine polymérisée,
- adjuvants de mise en oeuvre, tels que des amines aliphatiques à chaîne longue, des sels de l'acide stéarique, etc.
- charges pulvérulentes, telles que noir de carbone, silice, kaolin, alumine, argile, alumino-silicate, talc, carbonate, et
- lubrifiants, tels que l'acide stéarique.

En particulier, l'addition de charges pulvérulentes a pour effet d'améliorer la résistance à la rupture et, dans certains cas, l'allongement à la rupture de la composition thermoplastique selon l'invention. La quantité de charge pouvant être incorporée à la composition peut atteindre jusqu'à 150 parties pour 100 parties en poids de polynorbornène, cette quantité étant bien évidemment variable selon la nature de la charge.

Bien entendu dans toute la présente invention, la présence d'un caoutchouc autre que le polynorbornène est optionnelle et les compositions peuvent ne comprendre que le polynorbornène réticulé au moyen du composé de formule (I). L'expression "un mélange d'au moins 50% en poids de polynorbornène et au plus 50% en poids d'un autre caoutchouc" doit donc être comprise comme équivalente à "de 50% à 100% en poids de polynorbornène et de 0 à 50% en poids d'un autre caoutchouc".

Par ailleurs la quantité du plastifiant du polynorbornène nécessaire pour abaisser sa température de transition vitreuse jusqu'à la gamme des caoutchoucs est bien connue de l'homme de l'art et se situe généralement entre 20 et 300 parties environ en poids pour 100 parties de polynorbornène.

Les compositions thermoplastiques selon l'invention, sont de préférence préparées par vulcanisation dynamique, c'est-à-dire en malaxant un mélange de polynorbornène, de plastifiant, de caoutchouc, de polymère(s) cristallin(s) à base d'oléfine et du composé de formule (I), à une température suffisante et pendant une durée suffisante pour réticuler le mélange (B) de polynorbornène et de caoutchouc. Le malaxage peut être effectué dans un appareillage conventionnel tel que par exemple un malaxeur Banbury, un malaxeur Brabender, un malaxeur Rhéocord ou une extrudeuse, à une température comprise entre 110° et 220°C environ pendant une durée comprise entre 3 et 15 minutes environ, cette durée étant d'autant moins longue que la température est plus élevée. Avant cette étape de malaxage, le mélange peut être d'abord homogénéisé dans un mélangeur interne à température modérée comprise entre 40° et 100°C environ.

Les compositions thermoplastiques selon l'invention peuvent être utilisées pour fabriquer des produits finis et articles industriels par les techniques d'extrusion, d'extrusion-soufflage, d'injection-moulage et de moulage par compression.

En particulier, elles peuvent être extrudées sur des extrudeuses de même type que celles couramment utilisées pour les polyoléfines, c'est-à-dire ayant un rapport longueur/diamètre de vis généralement compris entre 18 et 28 environ et un taux de compression de préférence voisin de 3,0. Le profil de température affiché le long de la vis est généralement assez plat, la différence de température entre l'entrée et la filière étant de 10°C à 20°C environ. La température de la composition dans l'extrudeuse (température de la matière) peut être comprise entre 150°C et 220°C environ, de préférence entre 160° et 180°C. Ces extrudeuses sont équipées de filières profilés (par exemple profilés de menuiserie industrielle). La vitesse d'extrusion se situe entre 15 et 50 mètres par minute environ et l'extrudat ne subit pratiquement aucun étirage en sortie ; il est refroidi dans un bain d'eau et passe sur un banc de tirage dont la vitesse est généralement comprise entre 100% et 110% environ de la vitesse d'extrusion.

Les compositions selon l'invention peuvent également être injectées au moyen de presses à injection de même type que celles couramment utilisées pour le polyéthylène haute et basse densité et le polypropylène. La température de la matière dans la presse, fonction de la proportion de plastifiant dans la composition, est généralement comprise entre 120°C et 200°C environ. Cette température est d'autant plus faible que la proportion de plastifiant est plus élevée. Il convient généralement d'utiliser une pression d'injection nettement plus élevée que la pression de service, de manière à augmenter la fluidité de la matière pendant l'injection. A titre d'exemple, on pourra utiliser une pression d'injection de 700 bars lorsque la pression de service est de 150 bars. La vitesse de la vis de plastification pourra couramment atteindre 100 à 200 tours par minute environ. Selon la cadence d'injection recherchée, la température du moule pourra être choisie entre -10°C et +40°C environ.

Des applications concrètes des compositions selon l'invention comprennent notamment des tuyaux souples, des joints pour les industries du bâtiment et de l'automobile, des soufflets de protection pour l'industrie automobile, des articles injectés, tels que des roues pleines pour l'industrie du jouet, etc.

Les exemples ci-après sont donnés à titre illustratif et non limitatif de la présente invention.

EXEMPLE 1

Dans une première étape, 50 parties en poids de polynorbornène sont formulées avec 50 parties en poids de caoutchouc, 50 parties en poids de charge, 50 parties en poids de plastifiant et 1 partie en poids d'antioxydant dans un mélangeur interne de type Mielli, régulé à 80°C, pendant 4 minutes. Dans une seconde étape, la matière est reprise sur le même mélangeur, régulé à 80°C, dans lequel on ajoute l'agent de vulcanisation et l'accélérateur de vulcanisation. Le mélangeage est alors poursuivi pendant 8 minutes. Dans cet exemple :

- le polynorbornène utilisé est commercialisé par la demanderesse sous la dénomination NORSOREX®,
- le plastifiant est une huile paraffinique de point éclair égal à 225°C et de point de congélation égal à -10°C, commercialisée par la Société EXXON sous la dénomination FLEXON® 876,
- le caoutchouc est un caoutchouc butadiène commercialisé par la Société SHELL sous la dénomination BR 1220,
- la charge est du noir de carbone commercialisé par la Société CABOT sous la dénomination SRF,
- l'antioxydant est un phénol substitué commercialisé par la Société CIBA-GEIGY sous la dénomination IRGANOX® 1010,
- l'agent de vulcanisation est l'hexachloroparaxylène (4 parties en poids),
- l'accélérateur de vulcanisation est un mélange pondéral de 10 parties d'oxyde de zinc pour 2,5 parties de magnésie.

Le mélange élastomère ainsi formulé est vulcanisé sous presse à 180°C pendant 15 minutes pour former des plaques de 2,5 mm sur lesquelles on mesure les propriétés suivantes :

- allongement à la rupture exprimé en % et déterminé selon la norme ASTM-D 412,
- résistance à la rupture exprimée en MPa et déterminée selon la norme ASTM-D 412.

Ces deux propriétés sont mesurées successivement à l'instant initial (notées $AR_o$ et $RR_o$, après refroidissement des plaques), et après 15 jours de vieillissement à 100°C (notées $AR_{15}^{100}$ et $RR_{15}^{100}$ et après 42 jours de viellissement à 100°C (notées $Ar_{42}^{100}$ et $RR_{42}^{100}$).

Les résultats de ces mesures sont indiqués dans le tableau ci-après.

EXEMPLES 2 à 6

Dans une première étape, du polynorbornène est formulé avec un caoutchouc, un plastifiant, une charge, au moins un antioxydant et au moins un agent de vulcanisation dans un mélangeur interne tournant à 100 tours/min pendant 6 minutes, régulé à 80°C, puis la formulation obtenue est mise sous forme de feuille par passage sur un mélangeur à cylindre régulé à 60°C dans lequel on ajoute un accélérateur de vulcanisation. Dans une seconde étape, la masse caoutchoutique est additionnée d'un mélange de polyoléfines cristallines et reprise sur un malaxeur Brabender tournant à 90 tours/min à une température de 180°C pendant 8 minutes. La composition résultante est récupérée et moulée en plaques de 2,5 mm par compression, sur lesquelles on mesure les propriétés suivantes :

- allongement à la rupture exprimé en % et déterminé selon la norme ASTM-D 412,
- résistance à la rupture exprimée en MPa et déterminée selon la norme ASTM-D 412.

Ces deux propriétés sont mesurées successivement à l'instant initial (notées $AR_o$ et $RR_o$, après refroidissement des plaques), et après 15 jours de vieillissement à 100°C (notées $AR_{15}^{100}$) et $RR_{15}^{100}$), après 28 jours de viellissement à 100°C (notées $Ar_{28}^{100}$ et $RR_{28}^{100}$) et après 42 jours de viellissement à 100°C (notées $Ar_{42}^{100}$ et $RR_{42}^{100}$).

Les résultats de ces mesures sont indiqués dans le tableau ci-après, ainsi que les quantités pondérales des divers ingrédients de la composition. Dans ces exemples :

- le polynorbornène est commercialisé par la demanderesse sous la dénomination NORSOREX®,
- le caoutchouc est un caoutchouc styrène-butadiène commercialisé par la Société SHELL sous la dénomination SBR 1502 (exemples 2, 3, 5 et 6) ou bien un caoutchouc butadiène commercialisé par la Société SHELL sous la dénomination BR 1220 (exemple 4),
- le plastifiant est une huile naphténique commercialisée par la Société B.P. sous la dénomination EM 100 (exemples 2 à 4 et 6) ou bien un mélange de 55 parties en poids de ladite huile et de 170 parties en poids d'une huile paraffinique de point éclair égal à 225°C et de point de congélation égal à -10°C, commercialisée par la Société EXXON sous la dénomination FLEXON® 876 (exemple 5),

- la charge est du noir de carbone commercialisé par la Société CABOT sous la dénomination MT,
- l'antioxydant est un mélange pondéral de 2 parties d'un phénol substitué commercialisé par la Société CIBA-GEIGY sous la dénomination IRGANOX® 1010 et 1 partie d'un diphénol encombré stériquement commercialisé par la Société MONSANTO sous la dénomination SANTAVOR® A,
- l'agent de vulcanisation est l'hexachloroparaxylène (exemples 2, 4, 5 et 6) ou bien un mélange pondéral de 4 parties d'hexachloroparaxylène et 3 parties d'une résine phénolique de formule :

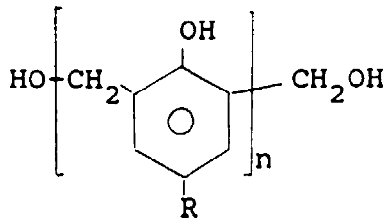

  dans laquelle n = 4 ou 5 et R désigne un radical alkyle, commercialisée par la Société SCHENECTADY sous l'appellation SP 1045 (exemple 3),
- l'accélérateur de vulcanisation est un mélange pondéral de 10 parties d'oxyde de zinc pour 2,5 parties de magnésie, et
- le mélange de polyoléfines cristallines est un mélange comprenant (en poids) 77% d'un polypropylène commercialisé par la Société SOLVAY sous la dénomination RF 110 et de 23% d'un copolymère éthylène/butène-1, de densité 0,910, possédant un indice de fluidité de 1 dg/min., un pic de fusion cristalline de 116°C et un taux de cristallinité de 30%, commercialisé sous la dénomination NORSOFLEX® FW 1600.

EXEMPLE 7 (COMPARATIF)

Le polynorbornène des exemples précédents est formulé avec le plastifiant de l'exemple 2 et avec les autres ingrédients des exemples 2 à 6 dans les proportions indiquées au tableau ci-après, à l'exception de l'agent de vulcanisation qui est ici constitué de la seule résine phénolique SP 1055 de la Société SCHENECTADY. Les propriétés de la composition thermoplastique résultante après vieillissement figurent dans le tableau ci-après.

TABLEAU

| Exemple | 1 | 2 | 3 | 4 | 5 | 6 | 7 |
|---|---|---|---|---|---|---|---|
| Polynorbornène | 50 | 80 | 80 | 80 | 80 | 80 | 100 |
| Plastifiant | 50 | 150 | 150 | 150 | 225 | 150 | 150 |
| Charge | 50 | 100 | 100 | 100 | 150 | 100 | 50 |
| Agent de vulcanisation | 4 | 4 | 7 | 4 | 4 | 4 | 10 |
| Accélérateur de vulcanisation | 12,5 | 12,5 | 12,5 | 12,5 | 12,5 | 12,5 | 0 |
| Caoutchouc | 50 | 20 | 20 | 20 | 20 | 20 | 0 |
| Antioxydant(s) | 1 | 3 | 3 | 3 | 3 | 3 | 1 |
| Polyoléfines | 0 | 104 | 105 | 104 | 140 | 0 | 104 |
| $AR_0$ | 170 | 370 | 360 | 350 | 360 | 490 | 170 |
| $RR_0$ | 6,2 | 7,7 | 6,1 | 5,7 | 4,9 | 11,5 | 4,0 |
| $AR_{15}^{100}$ | 160 | 310 | 230 | 240 | 240 | 350 | 8 |
| $RR_{15}^{100}$ | 6,6 | 7,9 | 5,6 | 6,0 | 5,4 | 8,5 | 1,0 |
| $AR_{28}^{100}$ | n.d. | 280 | 120 | 230 | 180 | n.d. | n.d. |
| $RR_{28}^{100}$ | n.d. | 7,2 | 4,2 | 5,9 | 4,7 | n.d. | n.d. |
| $AR_{42}^{100}$ | 150 | 280 | 100 | 200 | 180 | 280 | 4 |
| $RR_{42}^{100}$ | 6,6 | 7,2 | 4,0 | 5,2 | 4,8 | 8,0 | 0 |
| n.d. = non déterminé | | | | | | | |

EXEMPLE 8 (comparatif)

Dans une première étape, du polynorbornène est formulé avec une charge, un plastifiant, un antioxydant, dans un mélangeur interne de type Mielli, régulé à 80°C, pendant 4 minutes. Dans une seconde étape, la matière est reprise sur le même mélangeur, régulé à 80°C, dans lequel on ajoute l'agent de vulcanisation et l'accélérateur de vulcanisation. Le mélangeage est alors poursuivi pendant 8 minutes. Dans cet exemple comparatif:

- le polynorbornène utilisé est commercialisé par la demanderesse sous la dénomination NORSOREX®,
- le plastifiant est une huile paraffinique de point éclair égal à 225°C et de point de congélation égal à -10°C, commercialisée par la Société EXXON sous la dénomination FLEXON® 876,
- la charge pulvérulente est du kaolin calciné,
- l'antioxydant est un phénol substitué commercialisé par la Société CIBA-GEIGY sous la dénomination IRGANOX® 1010,
- l'agent de vulcanisation est une résine phénolique de formule :

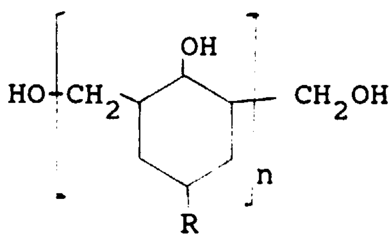

dans laquelle n = 4 ou 5 et R désigne un radical alkyle, commercialisée par la Société SCHENECTADY sous l'appellation SP 1045,
- l'accélérateur de vulcanisation est un mélange pondéral de 1 partie de chlorure stanneux $SnCl_2$, $2H_2O$ pour 10 parties d'oxyde de zinc.

Le mélange élastomère ainsi formulé est vulcanisé sous presse à 180°C pendant 15 minutes pour former des plaques de 2,5 mm sur lesquelles on mesure les propriétés suivantes :

- allongement à la rupture exprimé en % et déterminé selon la norme ASTM-D 412,
- résistance à la rupture exprimée en MPa et déterminée selon la norme ASTM-D 412.

Ces deux propriétés sont mesurées successivement à l'instant initial (notées $AR_o$ et $RR_o$, immédiatement après refroidissement des plaques), et après 15 jours de vieillissement à 100°C (notées $AR_{15}^{100}$ et $RR_{15}^{100}$).

Les quantités pondérales des divers ingrédients de la composition sont indiquées dans le tableau ci-après, ainsi que les résultats des mesures de propriétés effectuées comme décrit ci-dessus.

EXEMPLE 9

Une composition caoutchoutique dont les propriétés sont indiquées au tableau II ci-après est préparée dans les mêmes conditions qu'à l'exemple 8 et en utilisant les mêmes ingrédients, aux trois exceptions suivantes près :

- l'accélérateur de vulcanisation est constitué d'oxyde de zinc,
- l'agent de vulcanisation est l'hexachloroparaxylène,
- on ajoute de la magnésie à la composition.

TABLEAU II

| Exemple | 8 | 9 |
|---|---|---|
| Polynorbornène | 100 | 100 |
| Charge | 40 | 40 |
| Plastifiant | 150 | 150 |
| Antioxydant | 2 | 2 |

TABLEAU II (suite)

| Exemple | 8 | 9 |
|---|---|---|
| Agent de vulcanisation | 10 | 4 |
| Accélérateur de vulcanisation | 11 | 10 |
| Magnésie | 0 | 2,4 |
| $AR_o$ | 450 | 520 |
| $RR_o$ | 7,7 | 8,9 |
| $AR_{15}^{100}$ | 61 | 400 |
| $RR_{15}^{100}$ | 0,6 | 8,3 |

## Revendications

**Revendications pour les Etats contractants suivants : DE, GB, FR, IT, NL, SE, LI, CH, BE, AT, LU, GR, DK**

1. Composition caoutchoutique de tenue thermique améliorée à base de polynorbornène, caractérisée en ce qu'elle comprend un mélange d'au moins 50% en poids de polynorbornène et au plus 50% en poids d'un autre caoutchouc et en ce que ledit mélange a été vulcanisé au moyen d'une quantité comprise entre 0,1% et 6% en poids par rapport au mélange de polynorbornène et de caoutchouc, d'au moins un composé de formule :

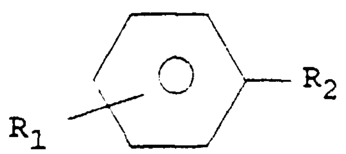 (I)

dans laquelle $R_1$ et $R_2$, identiques ou différents, sont choisis parmi les radicaux $CH_nX_{3-n}$, X étant un atome d'halogène choisi parmi le chlore et le brome et n étant un nombre entier allant de 0 à 2, en présence d'au moins un accélérateur de vulcanisation et éventuellement d'au moins un activateur de vulcanisation.

2. Composition thermoplastique de tenue thermique améliorée comprenant :

- de 10 à 90 parties en poids d'au moins un polymère cristallin (A) à base d'oléfine,
- de 90 à 10 parties en poids d'un mélange (B) d'au moins 50% en poids de polynorbornène et au plus 50% en poids d'un autre caoutchouc, et
- une quantité de plastifiant du polynorbornène suffisante pour abaisser sa température de transition vitreuse jusqu'à la gamme des caoutchoucs,

la somme du polymère (A) et du mélange (B) étant égale à 100 parties en poids et le mélange (B) étant vulcanisé au moyen d'une quantité comprise entre 0,1% et 6% en poids par rapport au mélange de polynorbornène et de caoutchouc, d'au moins un composé de formule :

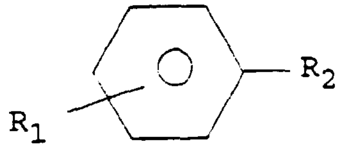 (I)

dans laquelle $R_1$ et $R_2$, identiques ou différents, sont choisis parmi les radicaux $CH_nX_{3-n}$, X étant un atome d'halogène choisi parmi le chlore et le brome et n étant un nombre entier allant de 0 à 2, en présence d'au moins un accélérateur de vulcanisation et éventuellement d'au moins un activateur de vulcanisation.

3. Composition selon l'une des revendications 1 et 2, caractérisée par le fait qu'elle comprend de la magnésie.

**4.** Composition selon l'une des revendications 1 à 3, caractérisée en ce qu'elle comprend en outre au moins un additif choisi parmi les antioxydants, les lubrifiants et les charges pulvérulentes.

**5.** Composition thermoplastique selon la revendication 2, caractérisée en ce qu'elle comprend en outre au moins un additif choisi parmi les pigments, les agents de couplage, les stabilisants et les adjuvants de mise en oeuvre.

**6.** Composition selon la revendication 2, caractérisée en ce que le polymère cristallin à base d'oléfine est choisi parmi les polymères de propylène, les polymères radicalaires de l'éthylène, les polymères linéaires de l'éthylène et les copolymères d'éthylène et d'acrylate d'alkyle.

**7.** Composition selon l'une des revendications 1 à 6, caractérisée en ce que le caoutchouc est choisi parmi le caoutchouc naturel, le caoutchouc nitrile, le caoutchouc butadiène, le caoutchouc styrène-butadiène, le polychloroprène, les caoutchoucs butyl et butyl bromé, le polyisoprène et les caoutchoucs éthylène-propylène et éthylène-propylène-diène.

**8.** Composition selon la revendication 1, caractérisée en ce qu'elle comprend en outre au moins un plastifiant capable d'abaisser la température de transition vitreuse du polynorbornène jusqu'à la gamme des caoutchoucs.

**9.** Composition selon l'une des revendications 2 et 8, caractérisée en ce que le plastifiant est choisi parmi les huiles lourdes aromatiques, napthéniques ou paraffiniques de point de congélation inférieur à 0°C et de point éclair supérieur à 180°C et les diesters de l'acide phtalique.

**10.** Article industriel obtenu par extrusion, extrusion-soufflage, injection-moulage ou moulage par compression d'une composition selon l'une des revendications 2, 5 et 6.

**Revendications pour l'Etat contractant suivant : ES**

**1.** Procédé de fabrication d'une composition caoutchoutique de tenue thermique améliorée à base de polynorbornène, caractérisé en ce qu'on malaxe, le cas échéant après homogénéisation à température modérée, les constituants de ladite composition comprenant un mélange d'au moins 50% en poids de polynorbornène et au plus 50% en poids d'un autre caoutchouc, auxquels on a ajouté une quantité efficace pour vulcaniser ledit mélange, comprise entre 0,1% et 6% en poids environ par rapport audit mélange, d'au moins un composé de formule :

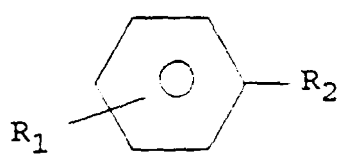

(I)

dans laquelle $R_1$ et $R_2$, identiques ou différents, sont choisis parmi les radicaux $CH_nX_{3-n}$, X étant un atome d'halogène choisi parmi le chlore et le brome et n étant un nombre entier allant de 0 à 2,
ainsi qu'au moins un accélérateur de vulcanisation et éventuellement au moins un activateur de vulcanisation,
le malaxage étant effectué à une température comprise entre 110°C et 220°C environ pendant une durée comprise entre 3 et 15 minutes environ.

**2.** Procédé selon la revendication 1, caractérisé en ce qu'on réticule le mélange de polynorbornène et de caoutchouc jusqu'au point où pas plus de 10%, de préférence pas plus de 5%, du polynorbornène puisse être extrait par un solvant, tel que le xylène bouillant, dans lequel le polynorbornène non-réticulé est complètement soluble.

**3.** Procédé de fabrication d'une composition thermoplastique de tenue thermique améliorée, caractérisé en ce qu'on malaxe, le cas échéant après homogénéisation à température modérée,

- de 10 à 90 parties en poids d'au moins un polymère cristallin (A) à base d'oléfine,
- de 90 à 10 parties en poids d'un mélange (B) d'au moins 50% en poids de polynorbornène et au plus 50% en poids d'un autre caoutchouc, et
- une quantité de plastifiant du polynorbornène suffisante pour abaisser sa température de transition vitreuse

jusqu'à la gamme des caoutchoucs,

la somme du polymère (A) et du mélange (B) étant égale à 100 parties en poids,
et une quantité efficace pour vulcaniser le mélange (B), comprise entre 0,1% et 6% en poids environ par rapport audit mélange, d'au moins un composé de formule :

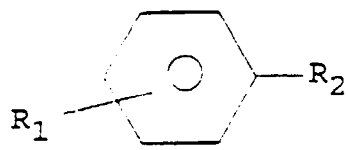

(I)

dans laquelle $R_1$ et $R_2$, identiques ou différents, sont choisis parmi les radicaux $CH_nX_{3-n}$, X étant un atome d'halogène choisi parmi le chlore et le brome et n étant un nombre entier allant de 0 à 2,
ainsi qu'au moins un accélérateur de vulcanisation et éventuellement au moins un activateur de vulcanisation,
le malaxage étant effectué à une température comprise entre 110°C et 220°C environ pendant une durée comprise entre 3 et 15 minutes environ.

**4.** Procédé selon l'une des revendications 1 à 3, caractérisé en ce que l'on incorpore de la magnésie à la composition à malaxer.

**5.** Procédé selon l'une des revendications 1 à 4, caractérisé en ce que l'on incorpore en outre à la composition à malaxer au moins un additif choisi parmi les antioxydants, les lubrifiants et les charges pulvérulentes.

**6.** Procédé selon la revendication 3, caractérisé en ce que l'on incorpore en outre à la composition à malaxer au moins un additif choisi parmi les pigments, les agents de couplage, les stabilisants et les adjuvants de mise en oeuvre.

**7.** Procédé selon la revendication 3, caractérisé en ce que l'on choisit le polymère cristallin à base d'oléfine parmi les polymères de propylène, les polymères radicalaires de l'éthylène, les polymères linéaires de l'éthylène et les copolymères d'éthylène et d'acrylate d'alkyle.

**8.** Procédé selon l'une des revendications 1 à 7, caractérisé en ce que l'on choisit le caoutchouc parmi le caoutchouc naturel, le caoutchouc nitrile, le caoutchouc butadiène, le caoutchouc styrène-butadiène, le polychloroprène, les caoutchoucs butyl et butyl bromé, le polyisoprène et les caoutchoucs éthylène-propylène et éthylène-propylène-diène.

**9.** Procédé selon la revendication 1, caractérisé en ce que l'on incorpore en outre à la composition à malaxer au moins un plastifiant capable d'abaisser la température de transition vitreuse du polynorbornène jusqu'à la gamme des caoutchoucs.

**10.** Procédé selon l'une des revendications 3 et 9, caractérisé en ce que l'on choisit le plastifiant parmi les huiles lourdes aromatiques, napthéniques ou paraffiniques de point de congélation inférieur à 0°C et de point éclair supérieur à 180°C et les diesters de l'acide phtalique.

**11.** Procédé de fabrication d'un article industriel par extrusion, extrusion-soufflage, injection-moulage ou moulage par compression d'une composition préparée par un procédé tel que défini à l'une des revendications 1 à 10.

**Patentansprüche**

**Patentansprüche für folgende Vertragsstaaten : DE, GB, FR, IT, NL, SE, LI, CH, BE, AT, LU, GR, DK**

**1.** Kautschukzusammensetzung auf Polynorbomenbasis mit verbessertem thermischen Verhalten, dadurch gekennzeichnet, daß sie eine Mischung aus mindestens 50 Gew.-% Polynorbornen und höchstens 50 Gew.-% eines weiteren Kautschuks enthält und daß die Mischung vulkanisiert ist mit Hilfe einer Menge zwischen 0,1 und 6 Gew.-

%, bezogen auf die Polynorbornen/ Kautschuk-Mischung, mindestens einer Verbindung der Formel

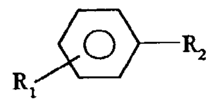

(I)

in der $R_1$ und $R_2$, identisch oder verschieden, ausgewählt sind aus Resten $CH_nX_{3-n}$, wobei X ein Halogenatom bedeutet, ausgewählt aus Chlor und Brom, und n für eine ganze Zahl von 0 bis 2 steht,
in Gegenwart mindestens eines Vulkanisationsbeschleunigers und gegebenenfalls mindestens eines Vulkanisationsaktivators.

**2.** Thermoplastische Zusammensetzung mit verbessertem thermischen Verhalten, enthaltend:

- 10 bis 90 Gew.-Teile mindestens eines kristallinen Polymers (A) auf Basis eines Olefins;
- 90 bis 10 Gew.-Teile einer Mischung (B) aus mindestens 50 Gew.-% Polynorbornen und höchstens 50 Gew.-% eines weiteren Kautschuks; und
- einen Weichmacher für das Polynorbornen in einer Menge, die ausreicht, um dessen Glasübergangstemperatur bis in den Bereich von Kautschuken abzusenken,

wobei die Summe an Polymer (A) und der Mischung (B) gleich 100 Gew.-Teile ist und die Mischung (B) vulkanisiert ist mit Hilfe einer Menge zwischen 0,1 und 6 Gew.-%, bezogen auf die Polynorbornen/ Kautschuk-Mischung, mindestens einer Verbindung der Formel

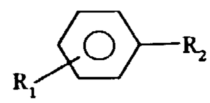

(I)

in der $R_1$ und $R_2$, identisch oder verschieden, ausgewählt sind aus Resten $CH_nX_{3-n}$, wobei X ein Halogenatom bedeutet, ausgewählt aus Chlor und Brom, und n für eine ganze Zahl von 0 bis 2 steht,
in Gegenwart mindestens eines Vulkanisationsbeschleunigers und gegebenenfalls mindestens eines Vulkanisationsaktivators.

**3.** Zusammensetzung nach Anspruch 1 oder 2, dadurch gekennzeichnet, daß sie Magnesiumoxid enthält.

**4.** Zusammensetzung nach einem der Ansprüche 1 bis 3, dadurch gekennzeichnet, daß sie außerdem mindestens ein Additiv enthält, ausgewählt aus Antioxidationsmitteln, Gleitmitteln und pulverförmigen Füllstoffen.

**5.** Thermoplastische Zusammensetzung nach Anspruch 2, dadurch gekennzeichnet, daß sie außerdem mindestens ein Additiv enthält, ausgewählt aus Pigmenten, Kupplern, Stabilisatoren und Verarbeitungshilfsmitteln.

**6.** Zusammensetzung nach Anspruch 2, dadurch gekennzeichnet, daß das kristalline Polymer auf Olefinbasis ausgewählt ist aus Propylenpolymeren, radikalischen Ethylenpolymeren, linearen Ethylenpolymeren und Ethylen/ Alkylacrylat-Copolymeren.

**7.** Zusammensetzung nach einem der Ansprüche 1 bis 6, dadurch gekennzeichnet, daß der Kautschuk ausgewählt ist aus Naturkautschuk, Nitrilkautschuk, Butadien-Kautschuk, Styrol/Butadien-Kautschuk, Polychloropren, Butyl- und Brombutylkautschuk, Polyisopren, Ethylen/Propylen- und Ethylen/Propylen/Dien-Kautschuk.

**8.** Zusammensetzung nach Anspruch 1, dadurch gekennzeichnet, daß sie außerdem mindestens einen Weichmacher umfaßt, der die Glasübergangstemperatur des Polynorbornens in den Bereich von Kautschuk absenken kann.

**9.** Zusammensetzung nach Anspruch 2 oder 8, dadurch gekennzeichnet, daß der Weichmacher ausgewählt ist aus schweren aromatischen Ölen, Naphthen- oder Paraffinölen mit einem Stockpunkt unterhalb von 0°C und einem Flammpunkt oberhalb von 180 °C und Phthalsäurediestern.

**10.** Industrieartikel, erhalten durch Extrusion, Extrusionsblasen, Spritzguß oder Formpressen einer Zusammensetzung nach einem der Ansprüche 2, 5 und 6.

**Patentansprüche für folgenden Vertragsstaat : ES**

1. Verfahren zur Herstellung einer Kautschukzusammensetzung auf Polynorbomenbasis mit verbessertem thermischen Verhalten, dadurch gekennzeichnet, daß man, gegebenenfalls nach Homogenisierung bei mäßiger Temperatur, die Bestandteile dieser Zusammensetzung, die eine Mischung aus mindestens 50 Gew.-% Polynorbornen und höchstens 50 Gew.-% eines weiteren Kautschuks enthält, verknetet, wobei man hierzu zwecks Vulkanisierung eine wirksame Menge zwischen etwa 0,1 Gew.-% und 6 Gew.-%, bezogen auf diese Mischung, mindestens einer Verbindung der Formel (I)

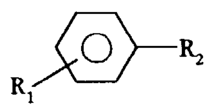

(I)

in der $R_1$ und $R_2$, identisch oder verschieden, ausgewählt sind aus Resten $CH_nX_{3-n}$, wobei X ein Halogenatom ist, das aus Chlor oder Brom ausgewählt ist, und n eine ganze Zahl von 0 bis 2 ist,
sowie mindestens einen Vulkanisationsbeschleuniger und gegebenenfalls mindestens einen Vulkanisationsaktivator hinzugibt,
wobei der Knetvorgang bei einer Temperatur zwischen etwa 110 °C und 220 °C für eine Dauer zwischen etwa 3 und 15 Minuten durchgeführt wird.

2. Verfahren gemäß Anspruch 1, dadurch gekennzeichnet, daß man die Mischung aus Polybornen und Kautschuk bis zu einem Punkt vernetzt, bei dem nicht mehr als 10 %, vorzugsweise nicht mehr als 5 %, des Polynorbornens mit einem Lösemittel, wie z.B. kochendes Xylol, in dem nicht-vernetztes Polynorbornen vollständig löslich ist, extrahiert werden können.

3. Verfahren zur Herstellung einer thermoplastischen Zusammensetzung mit verbessertem thermischen Verhalten, dadurch gekennzeichnet, daß man, gegebenenfalls nach Homogenisierung bei mäßiger Temperatur, die folgenden Komponenten verknetet:

- 10 bis 90 Gew.-Teile mindestens eines kristallinen Polymers (A) auf Basis eines Olefins;
- 90 bis 10 Gew.-Teile einer Mischung (B) aus mindestens 50 Gew.-% Polynorbornen und höchstens 50 Gew.-% eines weiteren Kautschuks; und
- eine ausreichende Menge eines Weichmachers für das Polynorbornen, um dessen Glasübergangstemperatur bis auf den Bereich von Kautschuken abzusenken;

wobei die Summe des Polymers (A) und der Mischung (B) gleich 100 Gew.-Teile beträgt,
sowie zur Vulkanisierung der Mischung (B) eine wirksame Menge zwischen etwa 0,1 Gew.-% und 6 Gew.-%, bezogen auf diese Mischung, mindestens einer Verbindung der Formel (I)

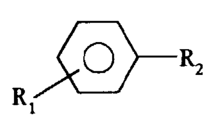

(I)

in der $R_1$ und $R_2$, identisch oder verschieden, ausgewählt sind aus Resten $CH_nX_{3-n}$, wobei X ein Halogenatom darstellt, das ausgewählt ist aus Chlor und Brom, und n eine ganze Zahl von 0 bis 2 ist,
sowie mindestens einen Vulkanisationsbeschleuniger und gegebenenfalls mindestens einen Vulkanisationsaktivator,
wobei der Knetvorgang bei einer Temperatur zwischen etwa 110 °C und 220 °C für eine Dauer zwischen etwa 3 und 15 Minuten durchgeführt wird.

4. Verfahren nach einem der Ansprüche 1 bis 3, dadurch gekennzeichnet, daß man zu der zu verknetenden Zusammensetzung Magnesiumoxid hinzugibt.

**5.** Verfahren nach einem der Ansprüche 1 bis 4, dadurch gekennzeichnet, daß man außerdem zu der zu verknetenden Mischung mindestens ein Additiv hinzugibt, das ausgewählt ist aus Antioxidationsmitteln, Gleitmitteln und pulverförmigen Füllstoffen.

**6.** Verfahren nach Anspruch 3, dadurch gekennzeichnet, daß man außerdem zu der zu verknetenden Mischung mindestens ein Additiv hinzugibt, das ausgewählt ist aus Pigmenten, Kupplern, Stabilisatoren und Verarbeitungshilfsmitteln.

**7.** Verfahren nach Anspruch 3, dadurch gekennzeichnet, daß man das kristalline Polymer auf Olefinbasis auswählt aus Propylenpolymeren, radikalischen Ethylenpolymeren, linearen Ethylenpolymeren und Ethylen/Alkylacrylat-Copolymeren.

**8.** Verfahren gemäß einem der Ansprüche 1 bis 7, dadurch gekennzeichnet, daß man den Kautschuk auswählt aus Naturkautschuk, Nitrilkautschuk, Butadien-Kautschuk, Styrol/Butadien-Kautschuk, Polychloropren, Butyl- und Brombutylkautschuken, Polyisopren und Ethylen/Propylen-Kautschuk und Ethylen/Propylen/Dien-Kautschuk.

**9.** Verfahren nach Anspruch 1, dadurch gekennzeichnet, daß man außerdem zu der zu verknetenden Mischung mindestens einen Weichmacher hinzugibt, der die Glasübergangstemperatur des Polynorbornens bis in den Bereich von Kautschuken absenken kann.

**10.** Verfahren gemäß Anspruch 3 oder 9, dadurch gekennzeichnet, daß man den Weichmacher auswählt aus schweren aromatischen Ölen, Naphthen- oder Paraffinölen mit einem Erstarrungspunkt unterhalb von 0 °C und einem Flammpunkt oberhalb von 180 °C und Phthalsäurediestern.

**11.** Verfahren zur Herstellung eines Industrieartikels mittels Extrusion, Extrusionsblasen, Spritzguß oder Formpressen einer Zusammensetzung, hergestellt gemäß einem Verfahren nach einem der Ansprüche 1 bis 10.

**Claims**

**Claims for the following Contracting States : DE, GB, FR, IT, NL, SE, LI, CH, BE, AT, LU, GR, DK**

**1.** Polynorbornene-based rubbery composition with improved thermal behaviour, characterized in that it comprises a mixture of at least 50% by weight of polynorbornene and not more than 50% by weight of another rubber and in that the said mixture has been vulcanised by means of a quantity of between 0.1% and 6% by weight relative to the mixture of polynorbornene and rubber, of at least one compound of formula :

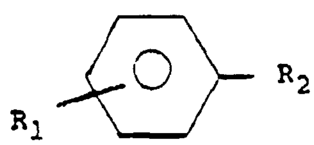

(I)

in which $R_1$ and $R_2$, which are identical or different, are chosen from radicals $CH_nX_{3-n}$, X being a halogen atom chosen from chlorine and bromine, and n being an integer ranging from 0 to 2, in the presence of at least one vulcanisation accelerator and possibly of at least one vulcanisation activator.

**2.** Thermoplastic composition with improved thermal behaviour, comprising :

- from 10 to 90 parts by weight of at least one olefin-based crystalline polymer (A),
- from 90 to 10 parts by weight of a mixture (B) of at least 50% by weight of polynorbornene and not more than 50% by weight of another rubber, and
- a sufficient quantity of plasticiser for polynorbornene to lower its glass transition temperature to the range of rubbers,

the sum of the polymer (A) and of the mixture (B) being equal to 100 parts by weight and the mixture (B) being

vulcanised by means of a quantity of between 0.1% and 6% by weight relative to the mixture of polynorbornene and rubber, of at least one compound of formula :

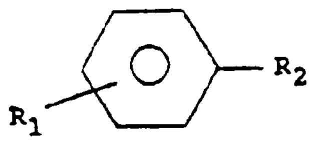

(I)

in which $R_1$ and $R_2$, which are identical or different, are chosen from radicals $CH_nX_{3-n}$, X being a halogen atom chosen from chlorine and bromine, and n being an integer ranging from 0 to 2, in the presence of at least one vulcanisation accelerator and possibly of at least one vulcanisation activator.

3. Composition according to either of Claims 1 and 2, characterized in that it comprises magnesia.

4. Composition according to anyone of Claims 1 to 3, characterized in that it additionally comprises at least one additive chosen from antioxidants, lubricants and pulverulent fillers.

5. Thermoplastic composition according to Claim 2, characterized in that it additionally comprises at least one additive chosen from pigments, coupling agents, stabilisers and processing aids.

6. Composition according to Claim 2, characterized in that the olefin-based crystalline polymer is chosen from propylene polymers, radical ethylene polymers, linear ethylene polymers and copolymers of ethylene and alkyl acrylate.

7. Composition according to anyone of Claims 1 to 6, characterized in that the rubber is chosen from natural rubber, nitrile rubber, butadiene rubber, styrène-butadiene rubber, polychloroprene, butyl and brominated butyl rubbers, polyisoprene and ethylene-propylene and ethylene-propylenediene rubbers.

8. Composition according to Claim 1, characterized in that it additionally comprises at least one plasticiser capable of lowering the glass transition temperature of polynorbornene to the range of rubbers.

9. Composition according to either of Claims 2 and 8, characterized in that the plasticiser is chosen from aromatic, naphthenic or paraffinic heavy oils with a setting point below 0°C and a flash point above 180°C, and diesters of phthalic acid.

10. Industrial article obtained by extrusion, extrusion blowing, injection moulding or compression moulding of a composition as defined in anyone of Claims 2, 5 and 6.

**Claims for the following Contracting State : ES**

1. Process for the preparation of a polynorbornene-based rubbery composition with improved thermal behaviour, characterized in that the components of said composition comprising a mixture of at least 50% by weight of polynorbornene and not more than 50% by weight of another rubber, to which is added a quantity effective to vulcanise said mixture of between approximately 0.1% and 6% by weight relative to the mixture of polynorbornene and rubber, of at least one compound of formula :

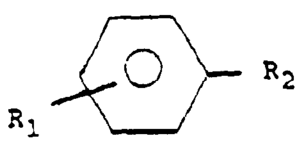

(I)

in which $R_1$ and $R_2$, which are identical or different, are chosen from radicals $CH_nX_{3-n}$, X being a halogen atom chosen from chlorine and bromine, and n being an integer ranging from 0 to 2,

as well as at least one vulcanisation accelerator and possibly at least one vulcanisation activator, are kneaded, possibly after homogenizing at a moderate temperature,
the kneading being carried out at temperature of approximately between 110°C and 220°C for a period of approximately between 3 and 15 minutes.

2. Process according to Claim 1, characterized in that the mixture of polynorbornene and rubber is crosslinked up to the point where not more than 10%, preferably not more than 5%, of the polynorbornene can be extracted with a solvent such as boiling xylene, in which uncrosslinked polynorbornene is completely soluble.

3. Process for the preparation of a thermoplastic composition with improved thermal behaviour, characterized in that

- from 10 to 90 parts by weight of at least one olefin-based crystalline polymer (A),
- from 90 to 10 parts by weight of a mixture (B) of at least 50% by weight of polynorbornene and not more than 50% by weight of another rubber, and
- a sufficient quantity of plasticiser for polynorbornene to lower its glass transition temperature to the range of rubbers,

the sum of the polymer (A) and of the mixture (B) being equal to 100 parts by weight and a quantity effective to vulcanise the mixture (B) of between 0.1% and 6% by weight relative to said mixture, of at least one compound of formula :

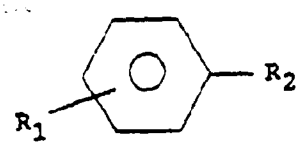 (I)

in which $R_1$ and $R_2$, which are identical or different, are chosen from radicals $CH_nX_{3-n}$, X being a halogen atom chosen from chlorine and bromine, and n being an integer ranging from 0 to 2,
as well as at least one vulcanisation accelerator and possibly at least one vulcanisation activator, are kneaded, possibly after homogenizing at a moderate temperature,
the kneading being carried out at temperature of approximately between 110°C and 220°C for a period of approximately between 3 and 15 minutes.

4. Process according to anyone of Claims 1 to 3, characterized in that magnesia is blended with the composition to be kneaded.

5. Process according to anyone of Claims 1 to 4, characterized in that at least one additive chosen from antioxidants, lubricants and pulverulent fillers is additionally blended with the composition to be kneaded.

6. Process according to Claim 3, characterized in that at least one additive chosen from pigments, coupling agents, stabilisers and processing aids is additionally blended with the composition to be kneaded.

7. Process according to Claim 3, characterized in that the olefin-based crystalline polymer is chosen from propylene polymers, radical ethylene polymers, linear ethylene polymers and copolymers of ethylene and alkyl acrylate.

8. Process according to anyone of Claims 1 to 7, characterized in that the rubber is chosen from natural rubber, nitrile rubber, butadiene rubber, styrene-butadiene rubber, polychloroprene, butyl and brominated butyl rubbers, polyisoprene and ethylene-propylene and ethylene-propylenediene rubbers.

9. Process according to Claim 1, characterized in that at least one plasticiser capable of lowering the glass transition temperature of polynorbornene to the range of rubbers is additionally blended with the composition to be kneaded.

10. Process according to either of Claims 3 and 9, characterized in that the plasticiser is chosen from aromatic, naphthenic or paraffinic heavy oils with a setting point below 0°C and a flash point above 180°C, and diesters of phthalic acid.

11. Process for the manufacture of an industrial article by extrusion, extrusion blowing, injection moulding or compression moulding of a composition prepared by a process as defined in anyone of Claims 1 to 10.